# EUROPEAN PATENT APPLICATION

(11) **EP 2 868 458 A1**
(43) Date of publication of application: **06.05.2015**
(21) Application number: 14003684.9
(22) Date of filing: 31.10.2014
(51) Int. Cl.: B29C 67/00, B29C 65/00

(54) **A method for feeding a printer of three-dimensional objects end element for supplying forming material**

(30) Priority: 02.11.2013 IT AN20130201
(71) Applicant: Corinaldesi, Stefano, 60030 Morro d'Alba (AN) (IT)
(72) Inventor: Corinaldesi, Stefano, 60030 Morro d'Alba (AN) (IT)
(74) Representative: Montebelli, Marco

(57) **Abstract**

A method for feeding a printer of three-dimensional objects with elongate, rod-shaped elements (1), for supplying material for forming said objects, comprises the steps of: feeding a first elongate element (1), longitudinally to itself; connecting to said elongate element (1) a second elongate element (1) positioned thereafter, in such a way as to form a series of at least two elongate elements (1) which are positioned longitudinally one after another; said connecting step being carried out using interconnecting means (2, 3) integrated in said elongate elements (1), which engage with one another with coupling of matching parts carried out with linear relative movement. The method provides for said connecting step to be carried out by means of a said linear movement which is performed along a direction (4) transversal to the longitudinal direction (5) of said elongate elements (1).

## Description

The present invention relates to the technical field of printers of three-dimensional objects and in particular to methods and products for feeding said printers with the necessary material for the forming of the objects.

For the forming of objects by means of three-dimensional printing, it is known to use special printers which use nozzles for dispensing drops of molten material, obtained by local fusion of solid material fed to the printer in the form of continuous filaments which unwind from one or more reels supplied with the same.

Such technology is described for example in document US 2011/0076495. This document discloses a method for feeding the printer which involves the use of continuous filaments of consumables, provided with grooves made on the outer surface thereof; and mechanical teeth driving mechanisms which, driven by motor rotors and engaged in meshing relationship with the grooves of the continuous filament, transmit to the latter the energy required to be fed, longitudinally to itself and supply the three-dimensional printer with the necessary material for forming the objects.

A different technology disclosed in document US 5764521 illustrates and describes a feeding system wherein short stretches of thermoplastic material in the form of substantially parallelepiped solids, with rectangular section (defined cuboids or wafer), are forcedly pushed in an extruder tube and made to advance in continuation and in mutual hooking along a feeding line of the printer. The wafers have their opposite ends shaped with geometrically complementary tabs and grooves which by coupling, allow transmitting through the junction tension and compression forces between two consecutive wafers.

Alternatively to the above-mentioned feeding technique with continuous filament and in order to overcome some drawbacks thereof found in particular in the production of small objects - such as the need of providing the printer with relatively large amounts of material compared to the needs and/or of having available many reels of different colours - a method for feeding has been recently developed which provides for the feeding with polymer slats, i.e. with thin rod-shaped elements of a predetermined length which, at the feeding of the supply and the consumption of material, are interconnected in mutual continuation to one another so as to ensure a cost-effective dispensing of material of the printer nozzles, since it is closely commensurate and dispensed with the actual volumetric needs of the object to be produced.

Within this last method, a solution is known which is implemented by the same Applicant which provides for the axial fitting connection of the rod-shaped elements, two by two in a succession, by means of pins and cavities complementary to each other alternately formed on end stretches of said rod-shaped elements. The pins and cavities engage with one another by axial and longitudinal coupling to the rod-shaped elements.

Said rod-shaped elements allow numerous practical advantages compared to the feeding of printers with continuous filament gradually unwinding from a corresponding reel.

However, they may be improved in terms of their flexural strength.

In fact, the type of connection described above causes, at the junction area, a certain reduction of the local resistance of the rod-shaped elements as a result of which the rod-shaped element shows a certain ease of rupture when subjected to excessive bending.

This may cause a malfunction of the printer and, in the best case, a discontinuity in the flow of forming material which could result in defects of continuity in the material forming the printed object.

Another drawback caused by this type of known connection relates to the fact that since the printers have a feedback function of the filament which makes the filament go backwards whenever the dispensing of the material must be stopped to prevent the material from exiting where it needs not be applied, in the case of axial junction whenever the filament is retracted, an uncoupling between the pin and the cavity occurs.

The object of the present invention therefore is to provide a solution to such drawbacks.

According to this object, the solution is achieved by a method for feeding and by a rod-shaped element used therein, the features whereof are defined by any one of the appended claims and the advantages whereof will be better illustrated in the following description, made with reference to the figures of the accompanying drawings, in which:
- figure 1 shows a first embodiment of the invention shown in enlarged scale;
- figures 2 and 3 show a second and a third alternative embodiment, respectively, of the invention in figure 1;
- figure 4 shows a schematic overall view of a further detail of the solutions in the preceding figures;
- figure 5 shows an exploded assembly diagram of what shown in figure 4.

With reference to the accompanying drawings, a method for feeding a printer of three-dimensional objects with elongate rod-shaped elements (1), for supplying the material for forming such objects, is described.

The method essentially comprises the steps of: feeding a first said elongate element (1), longitudinally to itself and along a longitudinal direction (5); and connecting to said elongate element (1) - before or during the feeding - a second elongate element (1) positioned after it, in such a way as to form a series of two or more elongate elements (1) which are positioned longitudinally one after another and drawing one another.

The connecting step is carried out by interconnecting means (2, 3) which: are integrated in the elongate elements (1) and are adapted to engage with one another with coupling of matching parts carried out with linear relative movement performed along a direction (4) transversal to the longitudinal feeding direction (5).

From the accompanying figures it is noted in general that the method uses elongate, rod-shaped elements (1) which include interconnecting means (2, 3) which are integrated and placed at least at one of the end stretches (6) of each elongate element (1).

Such means are preferably formed by matching projections (2) and cavities (3) shaped in such a way that they can engage with one another, respectively, with a relative linear coupling movement; movement that is directed transversely to the longitudinal extension direction (5) of the elongate elements (1), i.e. is directed transversely to the feed direction of the elements (1) during the supply of the printer.

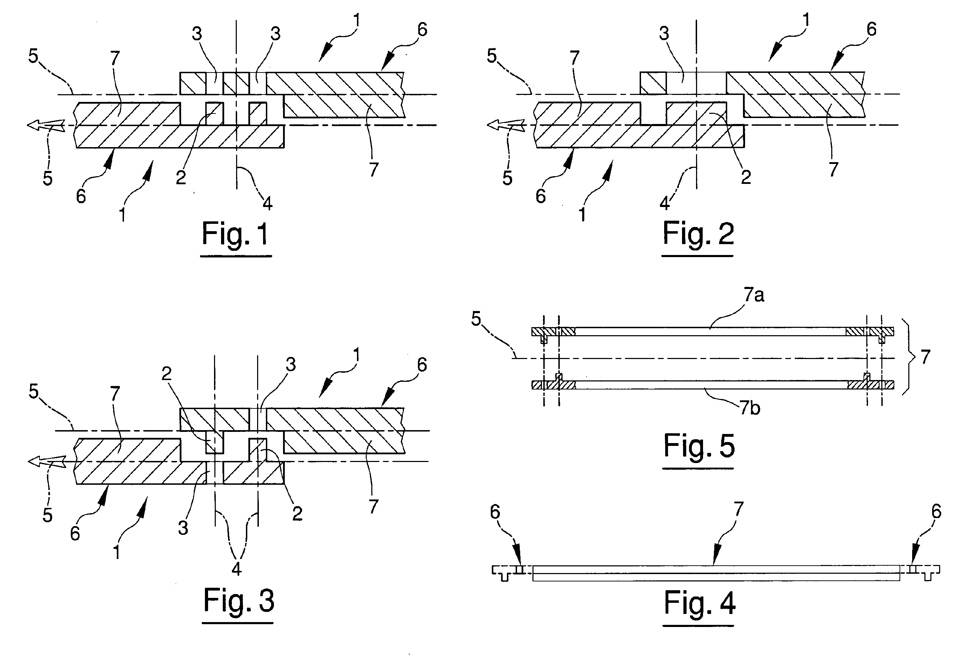

Within the scope of such a constructive concept, figure 1 shows that, according to a first embodiment, the elongate element (1) is provided with lowered end stretches (6), each of which is provided with projections (2) only or with cavities (3) only: the ones and the others preferably being two in number.

Figure 2 shows that as an alternative to the cylindrical shape, which could be imparted to the projections (2) and to the cavities (3) of the elongate element (1) in figure 1, a possible embodiment variant of the invention may also be achieved by means of elongate shapes of the projections (2) and cavities (3) according to the supply direction (5) of the elements (1), and preferably rectangular in shape.

Figure 3 shows a further variant of the invention which provides for each end stretch to simultaneously comprise at least one said projection (2) and at least one said cavity (3).

Irrespective of the embodiment of the invention, by coupling in superposing the lowered stretches (6) of two consecutive elongate elements (1) it is possible to create a serial concatenation of the elements (1) long enough for the press forming of the quantity of objects to be produced.

This advantageously allows obtaining a wide versatility of operational choices both in terms of combinations of materials and in terms of combination of their colours at low-cost, without waste of material or unnecessary storage of unused material.

Figure 4 shows a further variant according to which the elongate element (1) may be devised as provided with an intermediate body (7) between the end stretches (6), obtained by two separate parts (7a, 7b) (shown in figure 5) coupled to one another in mutual superposing and preferably with an arrangement bilateral to the longitudinal direction (5) of the elongate element (1).

The coupling between said parts (7a, 7b) may be achieved with several alternatives.

One of these alternatives may be obtained through the use of interconnecting means supported by said parts (7a, 7b) and provided with matching projections (8) and cavities (9) capable of mutual interpenetration, similar to those of the end stretches (6).

Another alternative may be assuming that said separate parts (7a, 7b) may be constrained to one another by the interposition of a gluing means; or by mutual welding, such as heat or ultrasound.

The construction of the body (7) into two separate parts (7a, 7b) and assemblable to form a single whole advantageously allows combining parts (7a, 7b) of different colours so as to obtain, at the time of melting the component material, molten material of a middle colour or a colour resulting from the combination of the basic colours available.

This advantageously allows making elements (1) by combining different polymers and/or also using combinations of different colours to create fantasy colours in various shades. By observing figures 1, 2 and 3 it is clear that the construction of the body (7) into two separate parts (7a, 7b) shown in figures 4 and 5 may also apply to the embodiments of the elongate elements (1) in figures 1, 2 and 3.

The invention fully achieves the objects, and in addition to the advantages mentioned in the description, in particular it also qualifies for the fact of eliminating at the root the risk of uncoupling between projections and cavities whenever the filament needs to be moved backwards to stop dispensing.

A further advantage of the invention is also to simplify the construction of the moulds compared to the solution of the prior art, which uses connections with pin and direct axial-insertion hole along the feeding direction.

In fact, by comparing the two solutions it is clear that the construction mould of the elements of the present invention is greatly simplified since it is free from the undercuts of the hole of the elongate element of the prior art, which in this solution must be made inoperative to allow the extraction of the piece from the relative mould.

The invention thus conceived has a clear industrial application; moreover, it may be subjected to several changes and variations, all falling within the scope of the claims; moreover, all the parts may be replaced with technically equivalent elements.

## Claims

1. A method for feeding a printer of three-dimensional objects with elongate, rod-shaped elements (1), for supplying material for forming said objects, the method comprising the steps of:
- feeding a first said elongate element (1), longitudinally to itself;
- connecting to said elongate element (1) a second elongate element (1) positioned thereafter, in such a way as to form a series of at least two elongate elements (1) which are positioned longitudinally one after another; said connecting step being carried out using interconnecting means (2, 3) integrated in said elongate elements (1), which engage with one another with coupling of matching parts carried out with linear relative movement;
- said method being **characterised in that** said connecting step is carried out by means of a said linear movement which is performed along a direction (4) transversal to the longitudinal direction (5) of said elongate elements (1).

2. An elongate, rod-shaped element, for supplying forming material to a printer of three-dimensional objects, comprising interconnecting means (2, 3) integrated and positioned at least at one of the end stretches (6) thereof, which consist of projections (2) and cavities (3) shaped to match each other in such a way that they can engage with one another with a linear relative coupling movement, transversally to the longitudinal direction (5) of extension of said elongate element (1), said element (1) being **characterised in that** said one or each end stretch (6) only comprises at least one said projection (2) or at least one said cavity (3).

3. The element according to claim 2, **characterised in that** one said end stretch (6) comprises at least two said projections (2), the other end stretch (6) in contrast comprising at least two corresponding said cavities (3).

4. The element according to claim 2, **characterised in that** each said end stretch (6) simultaneously comprises at least one said projection (2) and at least one said cavity (3).

5. The element according to one of claims 2 to 4, **characterised in that** it comprises a body (7) consisting of two separate parts (7a, 7b) which are coupled together by superposing them on each other.

6. The element (1) according to claim 5, **characterised in that** said separate parts (7a, 7b) differ by colour or by the type of material of which they are made.

7. The element (1) according to claims 5 or 6, **characterised in that** said body (7) is an intermediate component between said end stretches (6).

8. The element according to one of claims 5, 6 or 7, **characterised in that** said body (7) is equipped with interconnecting means supported by said parts (7a, 7b) and provided with matching projections (8) and cavities (9) capable of mutual interpenetration.

9. The element according to one of claims 5 to 7, **characterised in that** said separate parts (7a, 7b) can be constrained to one another by gluing or welding.
